Europäisches Patentamt

(19) European Patent Office    (11) Publication number:    **0 025 031**
Office européen des brevets                              **B1**

(12)                    **EUROPEAN PATENT SPECIFICATION**

(45) Date of publication of patent specification: **08.06.83**    (51) Int. Cl.³: **A 47 C 31/00, B 68 G 7/00**

(21) Application number: **79900532.7**

(22) Date of filing: **21.05.79**

(86) International application number:
**PCT/SE79/00112**

(87) International publication number:
**WO 80/01036 29.05.80 Gazette 80/12**

(54) **SEAT CUSHION OR BED CUSHION.**

(43) Date of publication of application:
**18.03.81 Bulletin 81/11**

(45) Publication of the grant of the patent:
**08.06.83 Bulletin 83/23**

(84) Designated Contracting States:
**FR**

(56) References cited:
**DK - B - 133 851**
**SE - A - 78 004 777**
**SE - B - 387 528**
**US - A - 2 814 053**
**US - A - 3 308 491**
**US - A - 3 574 873**
**US - A - 3 742 531**

(73) Proprietor: **JÄRVEN PLAST & SMIDE**
**AKTIEBOLAG**
**Bromsvägen 3**
**S-891 00 Örnsköldsvik (SE)**

(72) Inventor: **NORDIN, Inga Järven Plast&Smide AB**
**Bromsvägen 3**
**S-891 00 Ornsköldsvik (SE)**

(74) Representative: **Corre, Jacques Denis Paul**
**Cabinet Regimbeau 26, Avenue Kléber**
**F-75116 Paris (FR)**

Courier Press, Leamington Spa, England

Seat cushion or bed cushion

The present invention relates to a seat cushion or bed cushion of the type which is used for equalize the load of the body of the person at different types of disease states and which comprises a support cushion of an elastic foam plastic or foam rubber material which is enclosed in a water and gas sealed seat or bed tick of a pliable but preferably non-elastic material the length and width of which substantially corresponds to the length and width of the support cushion and which contains a liquid having a suitable viscosity.

Different types of beds or cushions are previously known which are intended to preclude pressure wounds or bedsore of persons sitting or lying for long periods, and which are intended to equalize or distribute the weight of the body in the best possible way. Since long time so called water bed has been used, which basically is formed as a water filled bag on which the patient is lying. Such a water bed gives a good distribution of the load, but it is disadvantageous in several other respects. For instance the water bed must be enclosed in a box or a frame what can cause discomfort or even hurt the patient or the nurse. Since the water can move within the bag without obstacles large movements of water appear as soon as the patient moves. Also depending on the different distribution of mass in the body of the patient the trunk and the upper portion of the body presses the cushion down so that the head, legs, arms and other relatively light portions of the body are positioned too high.

In order to avoid the said problems it has been suggested that the load equalizing seat cushion or bed cushion is formed of foam plastic or foam rubber material which is enclosed in a bag and the pores of which are filled with a liquid. Such cushions can be used without an outer frame or box, and in such cushions there are not as quick and disturbing movements of the liquid as in a conventional water bed. The foam plastic filled bed or cushion generally gives an acceptable equalizing of the body load, but the body is supported by different relative loads depending on the relative mass of the different portions of the body. For some purposes a more evenly distributed load is needed for all portions of the body, and in such case the foam plastic or foam rubber filled bed or cushion is not good. A cushion of the above-mentioned type is disclosed for instance in US—A—3 574 873.

It has also been suggested that the cushion which is filled with the foam material is enclosed in an outer bag which is in turn filled with water, but such a composit gives the same quick liquid movements as the conventional water bed, which movements are disturbing to the patient and the bed or mattress is complicated to manufacture.

Also in cushions filled with foam material and containing water there are liquid movements which are quick and disturbing, and in order to eliminate said disadvantage such cushions have been formed with partition walls containing valves which restrict the speed of the liquid movements between the different sections. Such cushions or beds also are expensive and complicated to manufacture, and there is always a risk that the valve between the different sections fail.

Most previously known cushions or beds of the above mentioned type are also disadvantageous in that the bed or cushion is like soft all over the bed, and the patient may feel unsafe since there may be risk that the patient drops over the edge of the bed when turning around. Also it is generally unpleasant to sit on the edge of the bed.

The object of the invention is to provide a seat cushion or bed cushion of the above mentioned type which has the same good ability as the conventional water bed to provide a very even distribution of the body load and which has the advantage of the foam material filled cushion to provide relatively slow water movements, which is made so that at least the longitudinal edges of the bed or cushion are somewhat harder than the remaining portions of the bed, but which can still be manufactured more simply and to a lower cost than the above mentioned beds having partition walls including valves or valve means.

According to the invention the support cushion is formed with several vertical through holes the cross section of which corresponds to a circle having the diameter of 45—75% of the height of the support cushion and the bed tick is higher than the support cushion and is filled with an excess of liquid.

Preferably the holes of the support cushion are evenly distributed over the entire cushion, and in a special embodiment of the invention the distance between the holes are between two and three times larger than the above mentioned diameter of the holes. The bed may be divided into a body portion which is water filled and a head portion which may or may not be filled with a liquid, and the bed may include a support frame of foam plastic or foam rubber in which the water mattress is immersed. In a further embodiment of the invention the water mattress may be small in relation to the support bed of foam material so as to support some part of the body of the patient whereas the remaining portions of the body are carried by the support mattress.

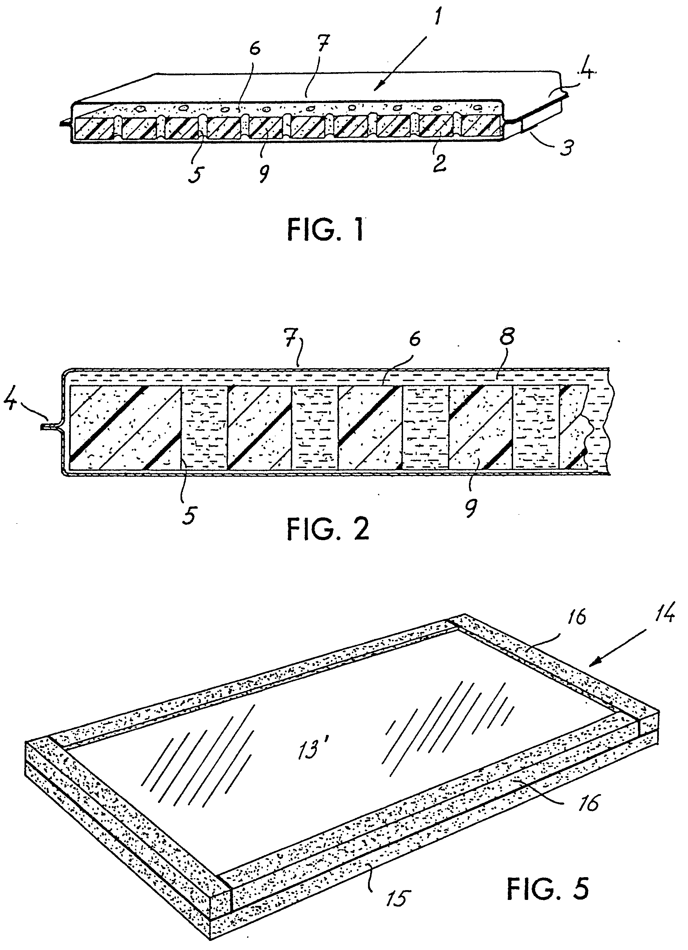

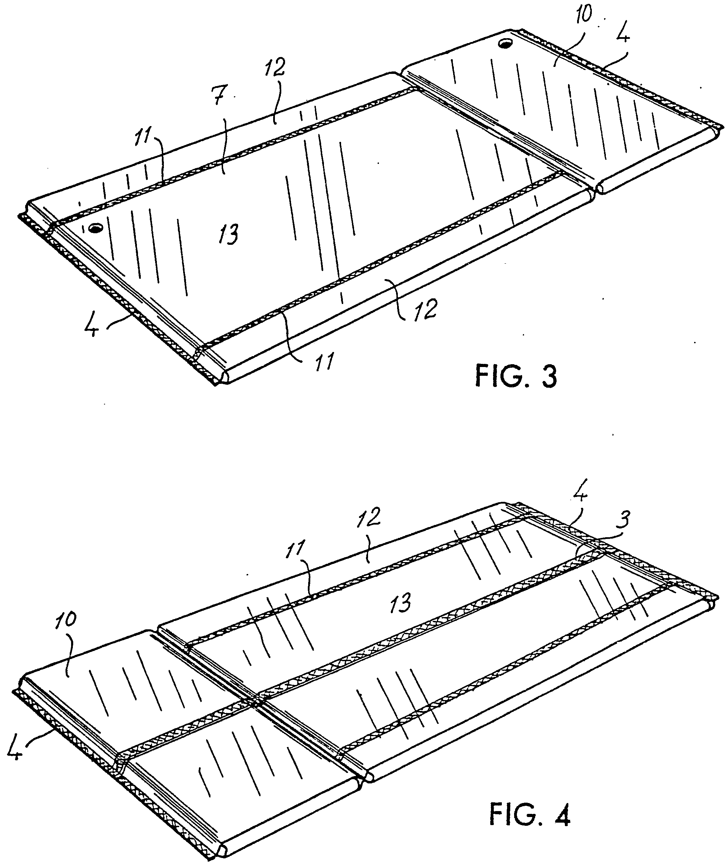

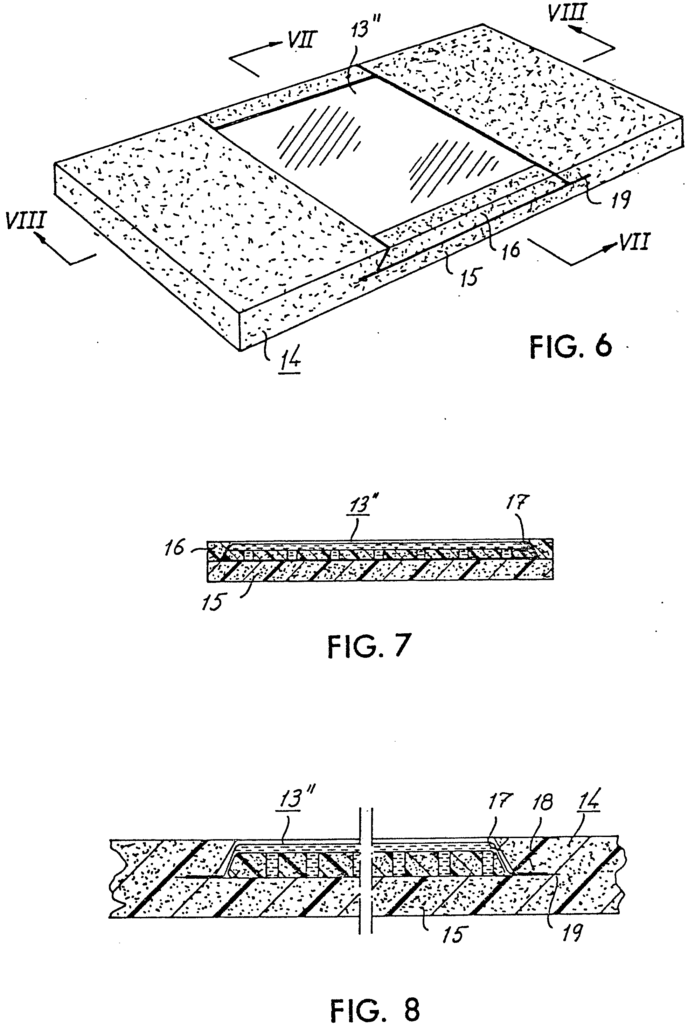

Further characteristics of the invention will be evident from the following detailed specification in which reference will be made to the accompanying drawings. In the drawings Figure 1 diagrammatically and in a perspective view shows a vertical cross section through a cushion or bed according to the invention, and Figure 2 is an enlarged cross section view through the cushion or bed according to Figure 1. Figure 3 is a top perspective view of a modified embodiment of the water bed, and Figure 4 is a bottom perspective view of the bed according to Figure 3. Figures 5 and 6 are further embodiments of the invention, Figure 7 is a cross section along line VII—VII of Figure 6 and Figure 8 is a partial cross section along line VIII—VIII of Figure 6.

The bed illustrated in Figures 1 and 2 generally comprises a liquid and gas tight bed tick 1 in the form of a bag in which a support cushion 2 of foam plastic is enclosed.

The bed tick is preferably formed as a tube having a longitudinal joint 3 located at the underside of the bed, and at both ends it is closed by cross joints 4.

The support bed 2, which is made of a spongy or elastic foam plastic or foam rubber material is formed with several vertical through holes 5 which are distributed over the entire support cushion 2 or a substantial part thereof. In order to give the bed an optimum good function the holes 5 should have a predetermined dimension in relation to the thickness of the support cushion 2, and the holes should be located at predetermined mutual distances from each other. The holes may have any cross section form, and they should have a cross section area corresponding to a circle, the diameter of which is between 45 and 75% of the thickness of the support cushion 2, and the distance between the holes 5 should be between two and three times as large as the diameter of the said circle.

The bed tick 1 which is preferably made of a pliable but non-elastic material has a length and a width which substantially corresponds to the length and width of the support cushion 2 whereas the bed tick is somewhat higher than the support cushion 2 to provide a space between the upper surface 6 of the support cushion 2 and the upper side 7 of the bed tick 1. Preferably the height of the bed tick is between 15 and 30% larger than the height of the support cushion 2. In the conventional way the bed tick 1 is formed with a (not illustrated) connection plug for filling liquid 8 into the bed tick. The said liquid preferably is water which is mixed with a suitable amount of consistancy in order to increase the viscosity of the water and a suitable amount of preservative to avoid the growth of bacteria or algae in the water. The liquid 8 shall fill all spaces of the bed tick, and by filling the liquid it is important to foresee that any air bubbles of the support cushion is pressed out and is substituted by liquid. In a ready and water filled bed there is consequently some excess amount of water in relation to the outer volume of the support cushion, and the said excess liquid, which in Figure 2 is shown in the space between the upper surface 6 of the support cushion and the upper side 7 of the bed tick and enclosed in the holes 5, provides a first support medium for the person who sits or lies on the bed. The support cushion 2 in turn provides both a secondary support element and a means for restricting or damping the movements of the liquid and to act as a water accumulator for those parts of the support cushion which have a less load than other parts of the support cushion. All pores of the support cushion thus should be filled with liquid, and likewise the holes 5 are entirely filled with liquid. When the bed or cushion is loaded some part of the liquid which is present above the upper surface 6 of the support cushion is pressed away and the upper side 7 of the bed tick 1 is pressed to the support cushion 2. Thereby the bed tick seals a number of holes 5 corresponding to the part of the bed or cushion which is loaded, and thereby all relatively quick liquid movement of the bed ceases. If at this moment an equalized state has not yet been reached the support cushion 2 is compressed more or less strongly depending on the load, and this is possible in that the liquid which is enclosed in the pores of the loaded massive portions 9 of the support cushion is pressed out and in addition thereto in that a large or little amount of the liquid existing in the sealed holes 5 is pressed through the said massive portions 9 of the support cushion. Some part of the liquids existing in the holes 5 also may be pressed out though the upper surface 6 of the support cushion and the through the upper surface 6 of the support cushion and the upper side 7 of the bed tick. In any case all movement of the liquid takes place slowly and damped and does not disturb the bed loading person as in conventional water beds. The liquid which is forced out flows away from the strongly loaded parts of the bed to less loaded parts like in the conventional water beds, but since the support cushion 2 has some load receiving ability it takes some portion of the load in case of strong loads thereby preventing a pressing out of a too large amount of liquid, and therefore the less loaded parts are not lifted as high as in conventional water beds.

In some cases it may be preferred to separate a part 10 of the bed from the remaining part of the bed, and the said separate section may be completely filled with a foam plastic or foam rubber material and it may include air instead of liquid. Such an embodiment of the invention is illustrated in Figures 3 and 4. The liquid free section 10 of the bed is less load active than the remaining part of the bed. For instance a portion of 50—70 cm of a bed can be formed as an air filled foam plastic or foam rubber cushion since normally the head and the shoulders of the patient need not be placed on water bed. Also the head end portion of the bed is substantially lighter than the water filled foot end portion so that it is easy to adjust the position of the head end between lying position and sitting position.

In some cases it may be preferable to provide a heat plate in the bed or cushion to keep the temperature of the liquid 8 on a pleasant level, and such heat plate may be welded into an outer separate pocket at the foot end of the bed. The support cushion 2 can be placed freely in the bed tick 1, but if found suitable it can be secured so as to be movable only a limited distance in that ribbons are tied around the support cushion and are secured to the bottomside of the bed tick.

A bed or cushion of the above kind may have different thickness depending on the type of support for the bed. In a practical embodiment of the invention a bed was formed for a hard support, whereby the support cushion 2 had a thickness of 7,5 cm, whereas the bed tick 1 had a height of 9 cm. The holes 5 of the support cushions were made circular with a diameter of 4 cm and the holes were placed with a mutual distance of 10 cm from each other corresponding the corners of a square the side of which was 10 cm. The outermost holes 5 where placed 10 cm from the outer edges of the support cushion 2. The bed proved to have a very good function. Tests showed that the diameter of the holes for an acceptable function of the bed could be reduced to about 3,5 cm or increased to about 5,5 cm or that the mutual distances between the holes by an acceptably reduced effect could be made between two and three times the diameter of the holes.

For a bed intended to be used on a soft support the support cushion 2 of foam plastic had a thickness of 4 cm, and from the said support cushion holes having a diameter of 2,5 cm were punched. The holes were located evenly distributed over the support cushion with a distance of 7 cm from each other. The bed gave an excellent result for a soft support, and tests showed that the hole diameter could be somewhat reduced or increased and that the distances between the holes could likewise be somewhat reduced without any substantial impaired effect. Since the longitudinal edges of the water bed are as soft as the remaining portions of the bed the patient may feel unsafe especially when turning in the bed, and it may also be unpleasant to sit at the bed side. For this purpose a little portion along the longitudinal edges of the bed can be made stiffer than the remaining parts of the bed in that the bed is formed with longitudinal partition walls 11 defining longitudinal edge pockets 12 which are completely filled only with foam plastic or foam rubber. The said filler material can be of a stiffer kind than the foam material in the water bed portion 13. Such embodiment of the invention is illustrated in Figures 3 and 4.

An alternative embodiment of the invention is illustrated in Figure 5 in which the water bed 13' is immersed in a foam plastic or foam rubber base having bottom 15 and a side frame 16 surrounding the water bed 13'. If found suitable the mattress recess of the base 14 can be covered with a plastic foil to receive any water which may leak out from the mattress.

In Figures 6—8 is illustrated a further embodiment of the invention in which the water mattress 13″ only covers a small part of the entire bed. Such embodiment of the invention is preferable in cases where some part of the body should have a stiff support, for instance broken legs, whereas the trunk of the body ought to rest on a water mattress in order to avoid bedsore.

In order to secure the water mattress 13″ safely in the recess of the bed sides 17 of the recess may be undercut as illustrated in Figures 7 and 8, and also the water mattress 13″ may be formed with connection tongues 18 which are introduced in longitudinally extending slots 19 of the foam plastic base 14 thereby keeping the water mattress 13 safely secured in the longitudinal direction.

**Claims**

1. Seat cushion or bed cushion comprising a support cushion (2) of an elastic foam plastic or foam rubber material which is enclosed in a water and gas sealed bed tick (1) of a pliable material, the length and width of which substantially corresponds to the length and width of the support cushion (2) and which contains a liquid having a suitable viscosity, characterized in that the support cushion (2) is formed with several vertical through holes (5) the cross section of which corresponds to a circle having a diameter of 45—75% of the height of the support cushion (2) and in that the bed tick (1) is higher than the support cushion (2) and is filled with an excess of liquid.

2. Bed cushion according to claim 1, characterized in that the bed tick (1) is about 20% higher than the support cushion (2).

3. Bed cushion according to claim 1 or 2, characterized in that the through holes (5) of the support cushion (2) are provided on a mutual distance from each other corresponding to 2—3 times the diameter of the holes (5).

4. Bed cushion according to any of the preceding claims, characterized in that the bed tick (1) is made of a pliable but non-elastic material.

5. Bed cushion according to any of the preceding claims, characterized in that the support cushion (2) is freely placed inside the bed tick (1).

6. Bed cushion according to any of claims 1—3, characterized in that the support cushion (2) is secured to the bottomside of the bed tick by means of loosely surrounding ribbons so that the support cushion (2) is movable a limited distance in the bed tick.

7. Bed cushion according to any of the preceding claims, characterized in that relative narrow portions (12) adjacent the longitudinal edges of the bed are formed stiffer than the remaining portions of the bed.

8. Bed cushion according to claim 7, characterized in that the said portions adjacent the longitudinal edges of the bed are formed as pockets (12) which are completely filled with a water free foam plastic or foam rubber material.

9. Bed cushion according to any of claims 1—6, characterized in that it is formed as a separate water bed portion (13′; 13″) which is immersed in a base plate (14) of foam plastic or foam rubber material having a frame (16) surrounding the entire water bed portion.

10. Bed cushion according to claim 9, characterized in that the water bed portion (13″) has a substantially less area than the base plate (14) and is secured immersed in the said base plate by connection tongues (18) which are introduced in longitudinal slots (19) of the base plate.

## Revendications

1. Coussin de siège ou de lit, comportant un coussin support (2) en mousse élastique de matière plastique ou de caoutchouc, qui est enfermé dans une enveloppe de matelas (1) étanche à l'eau et aux gaz en un matériau souple, dont la longueur et la largeur correspondent sensiblement à la longueur et à la largeur du coussin support (2) et qui contient un liquide de viscosité appropriée, caractérisé en ce que le coussin support (2) est réalisé avec plusieurs trous (5) traversant de part en part, verticaux, dont la section transversale correspond à un cercle ayant un diamètre compris entre 45 et 75% de la hauteur du coussin support (2), et en ce que l'enveloppe de matelas (1) a une hauteur supérieure à celle du coussin support (2) et est remplie d'un excès de liquide.

2. Coussin de lit selon la revendication 1, caractérisé en ce que l'enveloppe de matelas (1) est d'environ 20% plus hautre que le coussin support (2).

3. Coussin de lit selon la revendication 1 ou 2, caractérisé en ce que les trous traversants (5) du coussin support (2) sont prévus à une distance mutuelle les uns des autres correspondant à 2 à 3 fois les diamètres de trous (5).

4. Coussin de lit selon l'une des revendications précédentes, caractérisé en ce que l'enveloppe de matelas (1) est réalisée en un matériau souple mais non élastique.

5. Coussin de lit selon l'une des revendications précédentes, caractérisé en ce que le coussin support (2) est disposé librement dans l'enveloppe de matelas (1).

6. Coussin de lit selon l'une des revendications 1 à 3, caractérisé en ce que le coussin support (2) est fixé au côté inférieur de l'enveloppe de matelas au moyen de sangles l'entourant de façon lâche de sorte que le coussin support (2) soit déplaçable sur une distance limitée dans l'enveloppe de matelas.

7. Coussin de lit selon l'une des revendications précédentes, caractérisé en ce que des parties (12) relativement étroites à proximité des bords longitudinaux du matelas sont réalisées plus rigides que les restes du matelas.

8. Coussin de lit selon la revendication 7, caractérisé en ce que lesdites parties à proximité des bords longitudinaux du matelas sont réalisées sous la forme de poches (12) qui sont complètement remplies d'une mousse de matière plastique ou de caoutchouc exempte d'eau.

9. Coussin de lit selon l'une des revendications 1 à 6, caractérisé en ce qu'il est réalisé sous la forme d'une partie de matelas d'eau distincte (13′; 13″) qui est plongée dans une partie inférieure (14) de mousse de matière plastique ou de caoutchouc possédant un cadre (16) entourant la totalité du matelas d'eau.

10. Coussin de lit selon la revendication 9, caractérisé en ce que le matelas d'eau (13″) est de surface sensiblement inférieure à la partie inférieure (14) et est fixé après avoir été enfoncé dans ladite partie inférieure par des languettes d'attache (18) qui sont introduites dans des fentes longitudinales (19) de la partie inférieure.

## Patentansprüche

1. Sitz- oder Liegekissen mit einem Stützkissen (2) aus einem elastischen Schaumkunststoff oder -gummi, welches in eine aus biegsamen Material bestehende wasser- und gasdichte Matratzenhülle (1) eingeschlossen ist, deren Länge und Breite im wesentlichen der Länge und der Breite des Stützkissens (2) entsprechen und die eine Flüssigkeit geeigneter Viskosität enthält, dadurch gekennzeichnet, daß das Stützkissen (2) mit mehreren dieses vollständig durchsetzenden vertikalen Löchern (5) ausgeführt ist, deren Querschnitt einem Kreis mit einem Durchmesser zwischen 45 und 75% der Höhe des Stützkissens (2) entspricht, und daß die Matratzenhülle (1) eine die Höhe des Stützkissens (2) übersteigende Höhe aufweist und mit einem Flüssigkeitsüberschuß aufgefüllt ist.

2. Liegekissen nach Anspruch 1, dadurch gekennzeichnet, daß die Matratzenhülle (1) ungefähr 20% höher als das Stützkissen (2) ist.

3. Liegekissen nach Anspruch 1 oder 2, dadurch gekennzeichnet, daß die das Stützkissen (2) durchsetzenden Löcher (5) in einem wechselseitigen Abstand vorgesehen sind, der dem 2 bis 3-fachen des Durchmessers der Löcher (5) entspricht.

4. Liegekissen nach einem der vorstehenden Ansprüche, dadurch gekennzeichnet, daß die Matratzenhülle (1) aus einem biegsamen aber nicht elastischen Material verwirklicht ist.

5. Liegekissen nach einem der vorstehenden Ansprüche, dadurch gekennzeichnet, daß das Stützkissen (2) frei in der Matratzenhülle (1) angeordnet ist.

6. Liegekissen nach einem der Ansprüche 1 bis 3, dadurch gekennzeichnet, daß das Stützkissen (2) an der Unterseite der Matratzenhülle mittels dieses lose umgebender Gurte befestigt ist, derart, daß das Stützkissen (2) über einen begrenzten Weg in der Matratzenhülle verlagerbar ist.

7. Liegekissen nach einem der vorstehenden Ansprüche, dadurch gekennzeichnet, daß vergleichsweise schmale Teile (12) in der Nähe der längskanten der Matratze steifer als der Rest der Matratze ausgeführt sind.

8. Liegekissen nach Anspruch 7, dadurch gekennzeichnet, daß diese Teile in der Nähe der Längskanten der Matratze als Taschen (12), die vollständig mit einem von Wasser freien Schaumkunststoff oder -gummi ausgefüllt sind, ausgeführt sind.

9. Liegekissen nach einem der Ansprüche 1 bis 6, dadurch gekennzeichnet, daß es in Form eines gesonderten Wassermatratzenteils (13'; 13″), das in einem Unterteil (14) aus Schaumkunststoff oder -gummi mit einem die gesamte Wassermatratze umgebenden Rahmen (16) versenkt ist, ausgeführt ist.

10. Liegekissen nach Anspruch 9, dadurch gekennzeichnet, daß die Wassermatratze (13″) eine wesentlich geringere Fläche als das Unterteil (14) hat und nach Eindrücken in das Unterteil durch Befestigungsleisten (18) festgelegt ist, die in Längsschlitze (19) des Unterteils eingeführt sind.

0 025 031

FIG. 1

FIG. 2

FIG. 5

1

FIG. 3

FIG. 4

FIG. 6

FIG. 7

FIG. 8